Europäisches Patentamt

**European Patent Office**

**Office européen des brevets**

(19)

(11) Numéro de publication : **0 015 854**
**B1**

(12)

# FASCICULE DE BREVET EUROPÉEN

(45) Date de publication du fascicule du brevet :
22.09.82

(21) Numéro de dépôt : **80420017.8**

(22) Date de dépôt : **14.02.80**

(51) Int. Cl.³ : **B 60 L   5/16**

(54) **Dispositif pour la commande à distance de l'abaissement et du relevage des perches d'un trolleybus.**

(30) Priorité : **13.03.79 FR 7906927**

(43) Date de publication de la demande :
**17.09.80 (Bulletin 80/19)**

(45) Mention de la délivrance du brevet :
**22.09.82 Bulletin 82/38**

(84) Etats contractants désignés :
**AT BE CH DE GB IT LU NL SE**

(56) Documents cités :
**DE B 1 036 905**
**FR A 428 586**
**FR A 908 477**
**FR A 997 011**
**US A 1 420 131**

(73) Titulaire : **SOCIETE LYONNAISE DE TRANSPORTS
EN COMMUN T.C.L. Société anonyme dite:**
**50, cours Lafayette**
**F-69423 Lyon Cedex 3 (FR)**

(72) Inventeur : **Meurisse, Pierre**
**154, chemin de Choulans**
**Lyon 5ème (Rhône) (FR)**
Inventeur : **Muller, Georges**
**27, rue d'Alsace**
**Villeurbanne (Rhône) (FR)**
Inventeur : **Rossi, Victor**
**19, rue de la Résistance**
**Saint Didier au Mont d'Or (Rhône) (FR)**
Inventeur : **Fombonne-Granger, Gérard**
**32, rue Baraban**
**Lyon 3ème (Rhône) (FR)**

(74) Mandataire : **Maureau, Bernard et al**
**Cabinet GERMAIN & MAUREAU Le Britannia - Tour C**
**20, Boulevard Eugène Déruelle**
**F-69003 Lyon (FR)**

EP 0 015 854 B1

Dispositif pour la commande à distance de l'abaissement et du relevage des perches d'un trolleybus

La présente invention concerne un dispositif pour la commande à distance de l'abaissement et du relevage des perches d'un trolleybus.

Pour rendre plus souple l'exploitation des réseaux de transports en commun on a eu l'idée d'équiper les trolleybus d'un moteur thermique leur permettant de circuler occasionnellement hors des lignes aériennes, à puissance réduite. Ce mode exceptionnel de circulation, très utile, lorsqu'une partie de l'itinéraire normal du trolleybus est devenue impraticable, pour quelque cause que ce soit, implique que les perches soient abaissées et accrochées au toit du véhicule.

Cette opération, exécutée manuellement par le conducteur, oblige celui-ci à descendre sur la chaussée en abandonnant son poste de conduite, provoque une perte de temps, est incommode lorsqu'elle est exécutée de nuit/et ou par mauvais temps.

On a déjà réalisé un dispositif d'abaissement des perches commandées depuis le poste de conduite du véhicule et comprenant essentiellement, en association avec chaque perche, un vérin auxiliaire à simple effet et rappel par ressort dont le corps est articulé au sommet de l'embase pivotante sur laquelle est articulée la perche considérée, dont la tige est articulée en un point intermédiaire de ladite perche et dont l'alimentation est contrôlée par un robinet distributeur dont au moins l'organe de commande est placé dans le poste de conduite du trolleybus. Un tel dispositif est décrit dans le document FR-A 997 011.

Ce dispositif permet donc au conducteur d'abaisser et de relever les perches du trolleybus sans quitter son poste de conduite. Cependant, rien n'est parvenu à garantir, au moins dans une certaine limite et de manière efficace, que lors de leurs mouvements d'abaissement ou de relevage, les perches sont dans l'axe longitudinal du véhicule. Cette lacune nuit considérablement au rendement du dispositif précité. Il est déjà connu d'utiliser des moyens permettant de faire guider la perche entre des positions préférentielles, se référer, par exemple, au document DE-B-1 036 904.

La présente invention vise à pallier l'inconvénient précité d'une autre manière, en fournissant un dispositif du type précité comprenant, en outre, et également en association avec chaque perche, d'une part, une came disque, fixée à l'embase pivotante sur laquelle est articulée la perche considérée et présentant, sur un secteur s'étendant sur 45 à 60°, une partie concave située entre deux parties convexes symétriques, l'axe de symétrie de ce secteur étant logé dans un même plan vertical que l'axe longitudinal de la perche et, d'autre part, un levier articulé sur un arbre horizontal fixe, levier dont l'axe longitudinal est situé dans un plan vertical contenant l'axe vertical de l'embase pivotante de cette perche, et parallèle au plan médian du trolleybus, et dont une extrémité est attelée à des moyens permettant de le faire basculer entre une position dans laquelle son extrémité libre est appliquée contre la came précitée et une position dans laquelle cette extrémité libre est maintenue éloignée de la came de manière à ne pas entraver sa rotation et, par conséquent, celle de l'embase pivotante de la perche considérée, la force d'application de l'extrémité libre du levier précité contre la came et la nature des surfaces en contact étant choisies de manière que, lorsque les perches ne sont pas tenues par une ligne aérienne et lorsque le point de contact entre le levier et la came est situé entre les sommets des parties convexes de la came, cette dernière, et par conséquent l'embase pivotante, soit entraînée en rotation, jusqu'à ce que les deux plans verticaux précités soient confondus.

On obtient ainsi, dès le début de la course d'abaissement des perches, le pivotement de leur embase jusqu'à ce qu'elles soient correctement alignées suivant l'axe longitudinal du véhicule.

Suivant une forme d'exécution simple de l'invention, les moyens d'actionnement du levier destinés à agir sur la came de chaque pivot de perche pour l'amener en alignement avec l'axe longitudinal du véhicule, sont constitués par un vérin dont l'alimentation est simultanée à celle du vérin qui commande l'abaissement des perches.

En outre, ce type de véhicule étant généralement équipé d'un compresseur, et les vérins de relevage et d'abaissement des perches étant pneumatiques, chaque vérin de manœuvre du levier de verrouillage de chaque pivot de perche est un vérin pneumatique.

Pour assurer le maintien des perches en alignement avec l'axe longitudinal du trolleybus, au cours de leur relevage, et cela malgré une inclinaison latérale éventuelle du véhicule ou encore malgré la présence de vent transversal, suivant une forme d'exécution particulière de l'invention, il est prévu sur la canalisation unique d'alimentation de chaque vérin auxiliaire, un régulateur de débit retardant la décompression de la chambre de travail de ce vérin par rapport à celle du vérin d'abaissement et de relevage de la perche considérée, un clapet anti-retour étant monté en parallèle avec ce régulateur de débit de manière à permettre l'alimentation directe du vérin auxiliaire considéré.

Ainsi, les pivots des perches ne sont libres en rotation que lorsque les perches sont entièrement relevées, ce qui facilite considérablement cette opération de relevage, puisque, au cours de cette opération, les perches ne peuvent plus osciller tranversalement.

Suivant encore un autre mode de réalisation préférentiel de l'invention, produisant un meilleur rappel des cames en position médiane, l'extrémité libre du levier qui agit sur chaque came est constituée par un galet ;

En outre, de préférence, chacune des parties convexes de chaque came est elle-même constituée par un galet d'axe vertical de sorte que les frottements étant considérablement réduits, la force de rappel de chaque came en position médiane s'en trouve considérablement augmentée pour une même force d'actionnement du levier pivotant.

Suivant encore un autre mode de réalisation préférentiel de l'invention, pour éviter que la came ne soit entraînée en rotation dans le mauvais sens, si par suite d'une fausse manœuvre le point d'application entre le galet du levier pivotant et la came se trouve située en dehors des sommets des parties convexes de chaque came, cette dernière présente de part et d'autre des dits sommets des parties en saillie sur la trajectoire desquelles se trouve une partie du levier pivotant dont elles constituent une butée empêchant son galet d'entrer en contact avec l'un des galets de la came.

Pour permettre l'adaptation de ce dispositif à des trolleybus existants, l'élément de ce dispositif constitué par la came est solidaire d'une bride adaptable au pivot d'une perche de trolleybus et l'arbre horizontal sur lequel est articulé le levier pivotant est porté par une platine dans laquelle sont prévus des perçages correspondant à ceux prévus pour la fixation des embases de perches de trolleybus.

De toute façon, l'invention sera bien comprise à l'aide de la description qui suit, en référence au dessin schématique annexé, représentant, à titre d'exemple non limitatif, une forme d'exécution de ce dispositif.

Figures 1 et 2 en sont des vues schématiques en élévation de côté qui illustrent son principe de fonctionnement ;

Figures 3 et 4 sont des vues en plan par dessus correspondant aux positions des figures respectivement 1 et 2 ;

Figures 5 et 6 sont des vues respectivement en élévation, de côté, et en plan par dessus des moyens du dispositif permettant l'orientation et le blocage de l'embase pivotante de chaque perche ;

Figure 7 montre le schéma du circuit pneumatique de commande du dispositif objet de l'invention.

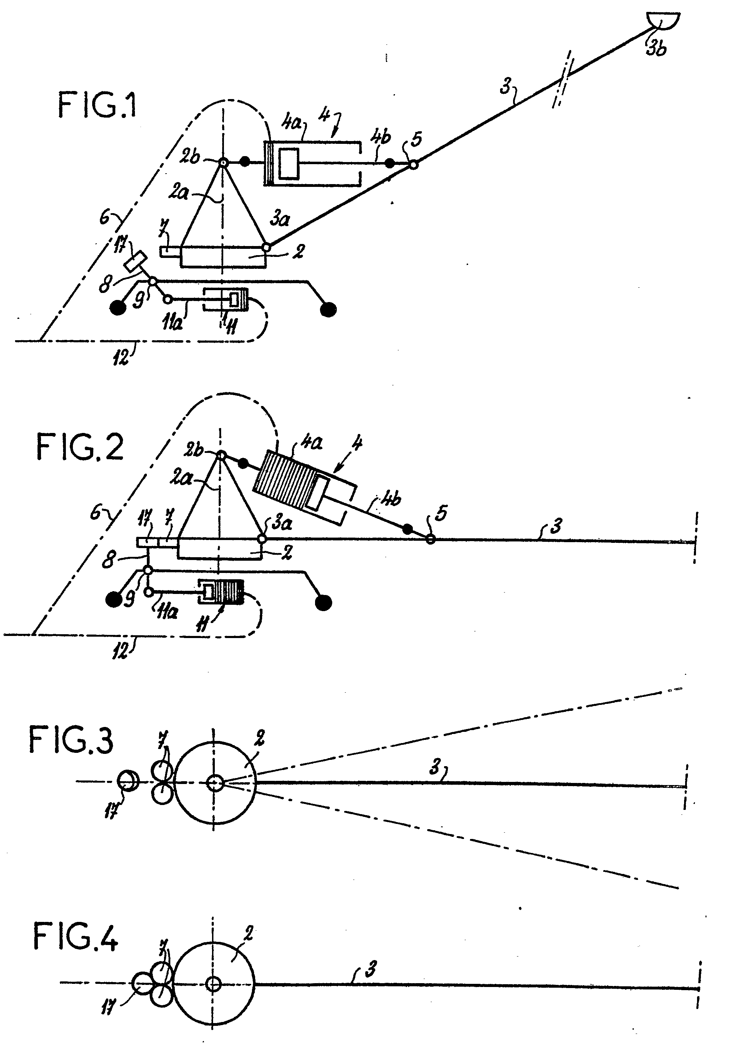

Dans les figures 1 à 4 du dessin, on a représenté l'embase pivotante 2 d'une perche 3 de trolleybus. L'embase pivotante 2 pivote autour d'un axe vertical 2a tandis que la perche 3 pivote autour d'un axe horizontal 3a.

Pour permettre de faire pivoter la perche 3 autour de son axe 3a entre une position d'utilisation dans laquelle son frotteur 3b est en contact avec l'un des conducteurs d'une ligne aérienne, tel qu'illustré sur la figure 1, et une position abaissée dans laquelle la perche 3 est rabattue horizontalement depuis son axe d'articulation 3a, comme illustré sur la figure 2, il est connu de prévoir, au sommet de l'embase pivotante 2 un axe d'articulation 2b parallèle à l'axe 3a sur lequel est articulé le corps 4a d'un vérin pneumatique 4 dont la tige 4b est elle-même articulée à un axe 5 parallèle aux axes 3a et 2b portés par la perche 3 en un point intermédiaire situé sensiblement au huitième de sa longueur à partir de son axe d'articulation 3a.

On conçoit aisément que lorsque le vérin 4 n'est pas alimenté en air comprimé, sa tige 4b est en position de retrait correspondant à la position relevée de la perche 3 (figure 1).

Au contraire, lorsque la chambre de travail du vérin 4 est alimentée en air comprimé à travers la canalisation 6, sa tige 4b est en position sortie, ce qui a pour effet d'abaisser la perche 3 (figure 2).

De tels dispositifs d'abaissement et de relevage de perches 3 sont connus mais présentent l'inconvénient de ne pas permettre une orientation correcte de la perche tant au cours de son abaissement qu'au cours de son relevage.

En effet, au cours de son abaissement, la perche doit être le plus près possible de sa position parallèle à l'axe longitudinal du véhicule, de manière à être verrouillée dans cette position en fin d'abaissement, ce qui permettra d'éviter qu'elle ne soit en saillie latéralement et présentera, en outre, l'avantage de faciliter la remise de son frotteur en contact avec la ligne lors de son relevage.

A cet effet, le dispositif de l'invention comprend en outre, une came disque 7 solidaire de l'embase pivotante 2 et un levier 8 articulé sur un axe horizontal fixe 9 transversal à l'axe longitudinal du véhicule et dont l'extrémité inférieure est attelée à la tige 11a d'un vérin 11 alimenté en air comprimé par une canalisation 12 et dont le corps est articulé sur un axe horizontal fixe parallèle à l'axe 9 précité.

Les figures 5 et 6 montrent, plus en détail, l'agencement de cette partie du dispositif.

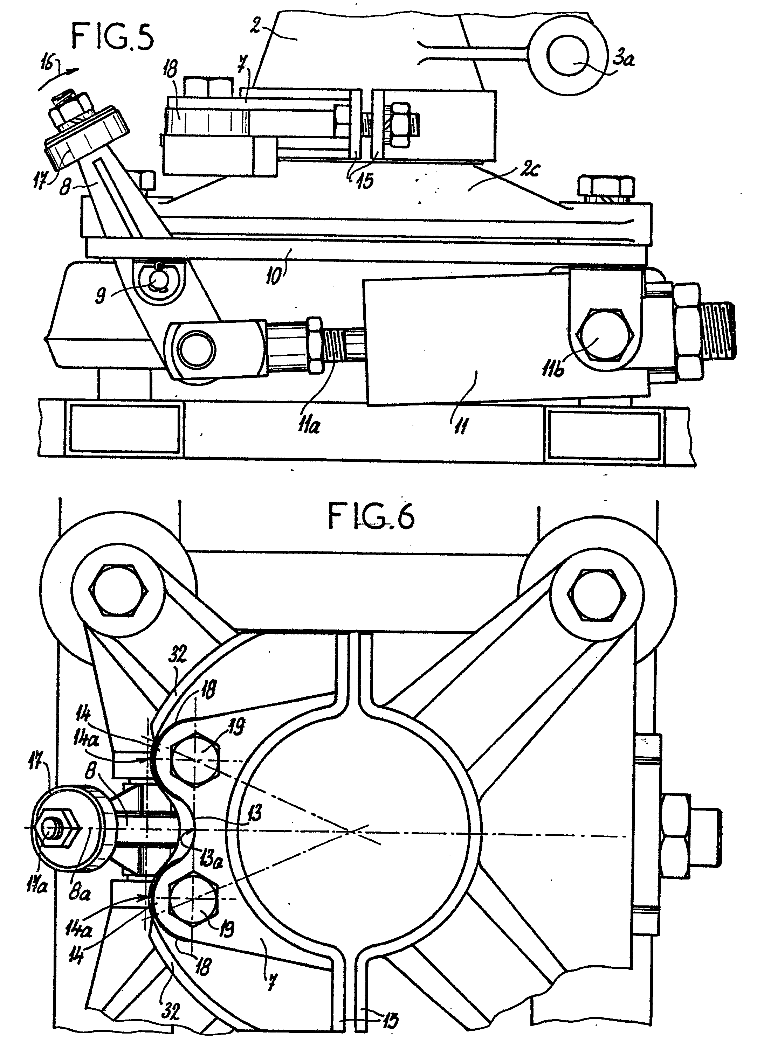

Comme le montre les figures 5 et 6, la came 7 présente sur un secteur s'étendant sur environ 45° de sa périphérie, une partie concave 13 située entre deux parties convexes symétriques 14. Cette came 7 est fixée à l'embase pivotante 2 au moyen d'une bride 15 de manière que, lorsque la perche portée par cette embase est orientée sur l'arrière du véhicule parallèlement à l'axe longitudinal de ce dernier, c'est-à-dire dans la position illustrée sur les figures 3 et 4, le sommet 13a de la partie concave 13 est situé dans le même plan vertical que l'axe longitudinal 8a du levier 8, comme illustré sur la figure 6.

On voit que la fixation d'une came 7 à une embase tournante 2 ne nécessite aucune modification de la dite embase.

Par ailleurs, les axes 9 et 11b sur lesquels sont articulés les leviers 8 et le corps du vérin 11 sont portés par une plaque 10 présentant des perçages en correspondance de ceux prévus sur chaque embase fixe 2c supportant une embase tournante 2, en vue de sa fixation au toit du trolleybus considéré. Il en résulte que chaque plaque 10 peut être associée à une embase fixe 2c et fixée avec elle au toit du véhicule sans aucune modification.

Il faut donc noter que le dispositif objet de l'invention peut être adapté sans aucune difficulté aux véhicules déjà en service.

L'axe d'articulation 9 du levier 8 est disposé de

telle sorte que lorsqu'il est basculé dans le sens de la flèche 16, son extrémité supérieure qui est libre, vient en contact avec le profil de la came 7, comme l'illustre très schématiquement la figure 4. Ce mouvement est commandé par la tige 11a du vérin 11 lorsque ce dernier est alimenté en air comprimé.

On conçoit aisément que, la perche considérée est pivotée d'un angle inférieur à 22° 30' d'un côté ou de l'autre de sa position normale illustrée sur la figure 3, que le vérin 11 est alimenté en air sous pression, le levier 8 est pivoté dans le sens de la flèche 16 et que son extrémité libre vient en appui contre le secteur précité de la came 7, c'est-à-dire entre les sommets 14a de ses deux parties convexes 14.

La pression exercée sur la came 7 par l'extrémité libre du levier 8 tend à faire pivoter cette dernière de manière que sa partie concave 13 se présente sous l'extrémité libre du levier 8 jusqu'à ce que son sommet 13a soit situé dans le même plan vertical que l'axe longitudinal du levier 8 comme illustré sur la figure 4.

Pour obtenir facilement ce résultat, sans nécessiter un vérin 11 de grande puissance, il est avantageux que, d'une part, l'extrémité libre du levier 8 soit constituée par un galet 17 dont l'axe 17a est coaxial à l'axe longitudinal 8a du levier 8, et que, d'autre part, chacune des parties convexes 14 de la came soit constituée par un galet 18 dont l'axe vertical 19 est porté par la came 7.

Pour obtenir le résultat recherché, il suffit donc que le vérin 11 soit alimenté simultanément au vérin 4, alors que les perches ne sont pas décalées par rapport à l'axe longitudinal du véhicule d'un angle supérieur à la moitié de l'angle formé par les sommets 14a des deux parties convexes 14 de la came 7.

Pour maintenir chaque perche en position abaissée, il suffit de maintenir le vérin 4 lui correspondant sous pression.

Inversement, pour relever les perches, il suffit de libérer la pression du vérin de relevage 4, ce qui permettra le retour des perches en appui contre les lignes aériennes sous l'effet de moyens à ressorts, non représentés sur le dessin.

La pression de chaque vérin 11 peut évidemment être libérée simultanément à celle des vérins 4 ; mais il est toutefois préférable que cette libération n'ait lieu qu'après l'achèvement du relevage des perches 3. En effet, si au cours du relevage les embases pivotantes 2 des perches 3 sont libres en rotation, le vent ou une inclinaison transversale éventuelle de la chaussée, pourrait provoquer le pivotement des perches.

C'est pourquoi, avantageusement, des moyens sont prévus pour assurer le maintien en pression de chaque vérin 11 tant que les perches n'ont pas atteint leur position relevée.

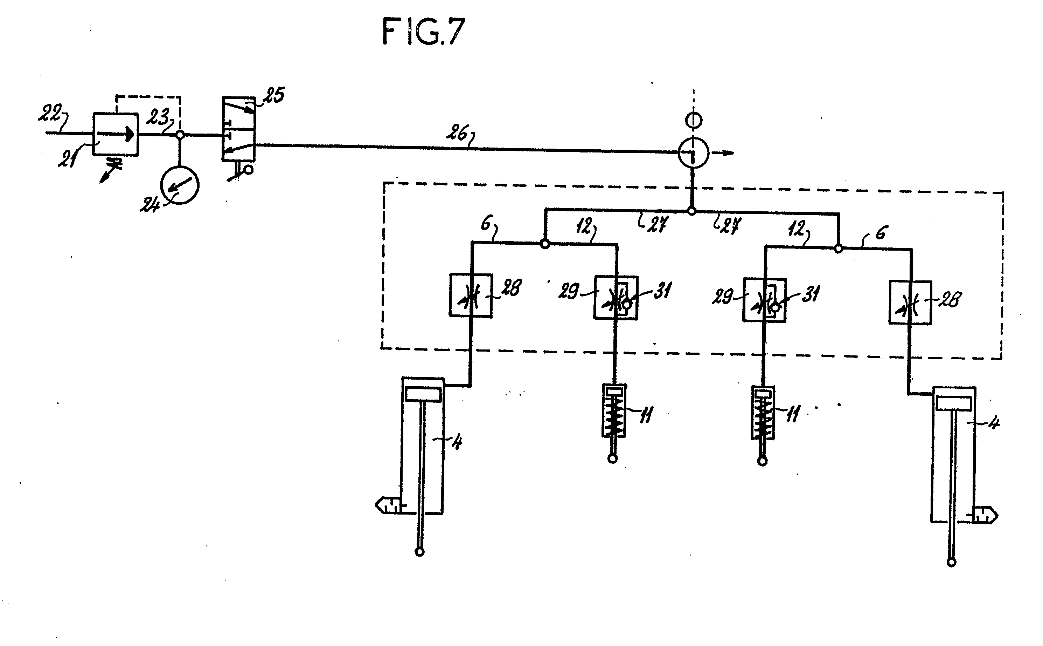

La figure 7 montre une forme d'exécution avantageuse du circuit d'alimentation en air comprimé des vérins 4 et 11. Sur cette figure sont représentés les deux vérins 4 et les deux vérins 11 d'un même trolleybus.

Le générateur d'air comprimé n'est pas représenté mais on peut supposer qu'il est situé en amont du manodétendeur 21 protégeant l'installation contre une surpression intempestive et auquel il est lié par une canalisation 22.

En aval du manodétendeur 21, l'air comprimé est conduit par une canalisation 23, équipée d'un manomètre 24 associé au manodétendeur 21, jusqu'à l'entrée d'un distributeur 25, lui-même relié par une canalisation 26 aux deux canalisations 27 dont chacune est destinée à alimenter les vérins 11 et 4 associés à une même perche 3.

Chaque canalisation 27 se divise donc en une canalisation 6 d'alimentation d'un vérin 4 et une canalisation 12 d'alimentation d'un vérin 11.

Comme le montre le dessin, chaque canalisation 6 est équipée d'un régulateur de débit réglable 28 permettant de régler la vitesse de relevages des perches 3 en limitant le débit d'air refoulé par la chambre de travail du vérin 4 correspondant.

Par ailleurs, chaque canalisation 12 est équipée d'un régulateur de débit réglable 29 monté en parallèle avec un clapet anti-retour 31. Les clapets anti-retour 31 permettent d'alimenter directement des vérins 11, de telle sorte que, compte tenu du fait que chaque vérin 4 est d'un volume bien supérieur à celui d'un vérin 11, chaque embase pivotante 2 est sollicitée angulairement, positionnée et immobilisée en rotation dès le début du mouvement d'abaissement des perches 3.

Au contraire, lors de la décompression des vérins 11, l'air refoulé par leur piston respectif est obligé de traverser le régulateur 29 correspondant, et il suffit de régler le débit de ce dernier pour obtenir que les embases pivotantes 2 demeurent immobilisées en rotation jusqu'à ce que les vérins 4 soient entièrement vidés d'air comprimé et que, par conséquent, les perches 3 soient entièrement relevées.

Il a été indiqué précédemment que, pour que le dispositif de l'invention soit efficace, il faut que l'extrémité libre du levier 8 ou galet 17 soit appliquée contre la came 7 entre les sommets 14a des parties convexes 14 de cette dernière. On conçoit aisément que s'il n'en n'était pas ainsi et si, par exemple, l'extrémité libre du levier 8 était appliquée contre la came 7, à l'extérieur des sommets précités, cela aurait pour effet d'entraîner la came 7 en rotation dans le sens opposé à celui recherché.

Pour y remédier, on a prévu sur la came 7 à l'extérieur des parties convexes 14 des parties en saillie 32 sur la trajectoire desquelles se trouve située au moins une partie du corps du levier 8. Si, par conséquent, le levier est basculé en direction de la came alors que l'embase pivotante occupe une position angulaire telle qu'il y a dépassement de l'un des sommets 14a par le levier 8, le mouvement de ce dernier est limité par l'entrée en contact de son corps avec l'une des parties en saillie 32 et le contact du galet 17 avec le profil de la came est empêché, ce qui n'entraîne dans ce cas aucun pivotement de l'embase.

Comme il va de soi, et comme il ressort de ce qui précède, l'invention ne se limite pas à la seule forme d'exécution de ce dispositif qui a été décrit ci-dessus à titre d'exemple ; elle en embrasse, au contraire, toutes les variantes de réalisation.

## Revendications

1. Dispositif pour la commande à distance de l'abaissement et du relevage des perches d'un trolleybus du type de ceux comprenant en association avec chaque perche (3), un vérin auxiliaire (4) à simple effet et rappel par ressort, dont le corps (4a) est articulé au sommet (2b) de l'embase pivotante (2) sur laquelle est articulée la perche considérée, dont la tige (4b) est articulée en un point intermédiaire (5) de la dite perche et dont l'alimentation est contrôlée par un robinet distributeur dont au moins l'organe de commande est placé dans le poste de conduite du trolleybus, caractérisé en ce qu'il comprend également en association avec chaque perche, d'une part, une came disque (7) fixée à l'embase pivotante et présentant, sur un secteur s'étendant sur 45 à 60°, une partie concave (13) située entre deux parties convexes symétriques (14), l'axe de symétrie de ce secteur étant logé dans un même plan vertical que l'axe longitudinal de la perche et, d'autre part, un levier (8) articulé sur un arbre horizontal fixe (9), levier (8) dont l'axe longitudinal est situé dans un plan vertical contenant l'axe vertical (2a) de l'embase pivotante de cette perche et parallèle au plan médian du trolleybus, et dont une extrémité est attelée (11a) à des moyens (11) permettant de le faire basculer entre une position dans laquelle son extrémité libre est appliquée contre la came précitée et une position dans laquelle cette extrémité libre est maintenue éloignée de la came de manière à ne pas entraver sa rotation et, par conséquent, celle de l'embase pivotante de la perche considérée, la force d'application de l'extrémité libre du levier précité contre la came et la nature des surfaces en contact étant choisies de manière que, lorsque les perches ne sont pas tenues par une ligne aérienne et lorsque le point de contact entre le levier et la came est situé entre les sommets (14a) des parties convexes de la came, cette dernière (7) et par conséquent l'embase pivotante, soit entraînée en rotation jusqu'à ce que les deux plans verticaux précités soient confondus.

2. Dispositif selon la revendication 1, caractérisé en ce que les moyens d'actionnement du levier destinés à agir sur la came de chaque embase pivotante de perche pour l'amener en alignement avec l'axe longitudinal du véhicule, sont constitués par un vérin (11) dont l'alimentation est simultanée à celle du vérin (4) qui commande l'abaissement des perches.

3. Dispositif selon la revendication 2, caractérisé en ce que chaque vérin de manœuvre du levier de verrouillage de chaque pivot de perche est un vérin pneumatique.

4. Dispositif selon la revendication 2 ou la revendication 3, caractérisé en ce qu'il est prévu, sur la canalisation unique (12) d'alimentation de chaque vérin auxiliaire, un régulateur de débit (29) retardant la décompression de la chambre de travail de ce vérin par rapport à celle du vérin d'abaissement et de relevage de la perche considérée, un clapet anti-retour (31) étant monté en parallèle avec ce régulateur de débit, de manière à permettre l'alimentation directe du vérin auxiliaire considéré.

5. Dispositif selon l'une quelconque des revendications précédentes, caractérisé en ce que l'extrémité libre du levier qui agit sur chaque came est constituée par un galet (17).

6. Dispositif selon l'une quelconque des revendications précédentes, caractérisé en ce que chaque came est elle-même constituée par deux galets (18) d'axes verticaux.

7. Dispositif selon la revendication 6, caractérisé en ce que chaque came présente de part et d'autre des dits sommets (4a), des parties en saillie (32) sur la trajectoire desquelles se trouve une partie du levier pivotant, dont elles constituent une butée empêchant son galet d'entrer en contact avec l'un des galets de la came.

8. Dispositif selon l'une quelconque des revendications précédentes, caractérisé en ce que l'élément de ce dispositif constitué par la came est solidaire d'une bride (15) adaptable à l'embase pivotante d'une perche de trolleybus et l'arbre horizontal (9) sur lequel est articulé le levier pivotant (8) est porté par une platine (10) dans laquelle sont prévus des perçages correspondant à ceux prévus pour la fixation des embases de perches de trolleybus.

## Claims

1. Apparatus for the remote control of the lowering and raising of the arms of a trolleybus of the type comprising in association with each arm (3), a single acting piston and cylinder (4) with return spring, the cylinder body (4a) being hinged at the top (2b) of the pivoting base on which is hinged the said arm, the piston (4b) being hinged in an intermediary point of the said arm and the supply being controlled by a valve distributor of which at least the operating component is placed in the drive control of the trolleybus, characterised in that the apparatus also includes in association with each arm, on the one hand, a cam disc (7) fixed to the pivoting base and having, on a sector of 45 to 60°, a concave part (13) situated between two symmetrically convex parts (14), the axis of symmetry of this sector being located in the same vertical plane as the longitudinal axis of the arm and, on the other hand, a lever (8) hinged on a fixed horizontal shaft (9), the lever (8) having its longitudinal axis situated in the vertical plane containing the vertical axis (2a) of the pivoting base of this arm and parallel to the median plane of the trolleybus and having an end attached at (11a) to means (11) enabling the lever to swing between a position in which its free end is applied against the aforesaid cam, and a position in which this free end is retained separate from the cam so as not to hinder rotation of the cam and, consequently, that of the pivoting base of the said arm, the application force of the free end of the said lever against the cam and the nature of the surfaces in contact being chosen in such a way that, when the arms are not held by an overhead line and when the point of contact between the lever and the cam is situated between the vertices (14a) of the convex parts of the cam, this cam (7) and consequently the pivoting base may be driven in rotation until the two aforesaid vertical planes are merged.

2. Apparatus according to claim 1, characterised in that the operation means of the lever intended to bear on the cam of each pivoting arm base to bring it into alignment with the longitudinal axis of the vehicle, are provided by a piston and cylinder (11) of which the supply is simultaneous with that of the piston and cylinder (4) which operates the lowering of the arms.

3. Apparatus according to claim 2, characterised in that each operating piston and cylinder of the locking apparatus lever of each arm pivot is a pneumatic piston and cylinder.

4. Apparatus according to claim 2 or claim 3, characterised in that on the single supply conduit (12) of each auxiliary piston and cylinder, a regulator output (29) is provided for delaying the decompression of the work chamber of this piston and cylinder in relation to that of the lowering and raising of the said arm, an anti-return valve (31) being mounted in parallel with this regulator output, so as to enable the direct supply of the said auxiliary piston and cylinder.

5. Apparatus according to any one of the preceding claims, characterised in that free end of the lever which acts on each cam is provided with a roller (17).

6. Apparatus according to any one of the preceding claims, characterised in that each cam itself is provided by two rollers with vertical axes.

7. Apparatus according to claim 6, characterised in that each cam has on both sides of said vertices (4a), protruding parts (32) on the trajectory of which a part of the pivoting lever is situated, and which provide a stop preventing its roller from coming into contact with one of the rollers of the cam.

8. Apparatus according to any one of the preceding claims, characterised in that the cam assembly of the apparatus is integral with a flange (15) adaptable to fit the pivoting base of a trolleybus arm, and the horizontal shaft (9) on which is hinged the pivoting lever (8) is carried by a plate (10) wherein are provided bores complementary to those provided for the fixing of the bases of trolleybus arms.

**Ansprüche**

1. Vorrichtung zur Fernlenkung des Senkens und des Hebens der Bügel einer Trolleybusses, von jenem Typ, umfassend in Verbindung mit jedem Bügel (3) eine einfachwirkende und durch Federwirkung rückführbare Stelleinrichtung (4), deren Körper (4a) an der Spitze (2b) der drehbaren Grundplatte (2) angelenkt ist, an welcher der zugehörige Bügel angelenkt ist, wobei die Stange (4b) der Stelleinrichtung an einem zwischen den Enden des besagten Bügels auf demselben liegenden Punkt (5) angelenkt ist, und wobei die Beaufschlagung der Stelleinrichtung durch einen Verteilerhahn gesteuert ist, von welchem wenigstens dessen Bedienungsorgan beim Fahrer des Trolleybusses angeordnet ist, dadurch gekennzeichnet, daß die Vorrichtung in gleicher Weise hinsichtlich jedes Bügels umfaßt einerseits eine an der drehbaren Grundplatte befestigte Nockenscheibe (7), welche in einem sich über 45 bis 60° erstreckenden Sektor einen konkaven Bereich (13) aufweist, der zwischen zwei symmetrischen, konvexen Bereichen (14) angeordnet ist, wobei die Symmetrieachse des Sektors in der gleichen Vertikalebene liegt wie die Längsachse des Bügels, anderseits einen um eine feststehende horizontale Achse (9) verschwenkbaren Hebel (8), dessen Längsachse in einer Vertikalebene liegt, welche auch die Vertikalebene (2a) der drehbaren Grundplatte des Bügels enthält und parallel zur Mittelebene des Trolleybusses verläuft, und dessen eines Ende bei (11a) mit Mitteln (11) verspannt ist, welche eine Schwenkbewegung zulassen zwischen einer Position, in welcher das freie Ende des Hebels gegen die vorgenannte Nockenscheibe gedrückt ist, und einer Position, in welcher das freie Ende des Hebels von der Nockenscheibe in der Weise entfernt gehalten ist, daß es die Rotation der Nockenscheibe und, in der Folge, auch jene der drehbaren Grundplatte des zugehörigen Bügels nicht behindert, wobei die Anpreßkraft des freien Endes des vorgenannten Hebels an die Nockenscheibe und die Art der Kontaktoberflächen derart gewählt sind, daß dann, wenn die Bügel nicht durch eine Oberleitung gehalten werden und der Anlaufpunkt des Hebels an die Nockenscheibe zwischen den Gipfeln (14a) der konvexen Bereiche der Nockenscheibe (7) gelegen ist, letztere (7) und in der Folge die drehbare Grundplatte so weit drehbar ist, bis die zwei vorgenannten Vertikalebenen zusammenfallen.

2. Vorrichtung nach Anspruch 1, dadurch gekennzeichnet, daß die Betätigungsmittel des Hebels, welche bestimmt sind, auf die Nockenscheibe jeder drehbaren Grundplatte des Bügels einzuwirken, um sie zum Fluchten mit der Längsachse des Fahrzeuges zu bringen, durch eine Stelleinrichtung (11) gebildet sind, die gleichzeitig mit jener Stelleinrichtung (4) beaufschlagbar ist, welche das Senken der Bügel steuert.

3. Vorrichtung nach Anspruch 2, dadurch gekennzeichnet, daß jede Stelleinrichtung zur Betätigung der Verriegelungshebel jedes Bügeldrehpunktes eine pneumatische Stelleinrichtung ist.

4. Vorrichtung nach Anspruch 2 oder 3, da-

durch gekennzeichnet, daß in der einzigen Beaufschlagungsleitung (12) jeder Stelleinrichtung ein
Reduzierventil (29) zur Verringerung des Druckes
in der Arbeitskammer dieser Stelleinrichtung gegenüber jenem in der Stelleinrichtung zum
Senken und Heben des zugehörigen Bügels, sowie ein zum Reduzierventil parallel geschaltetes
Rückschlagventil (31) vorgesehen ist, derart, daß
es die direkte Beaufschlagung der zugehörigen
Stelleinrichtung zuläßt.

5. Vorrichtung nach einem der vorhergehenden Ansprüche, dadurch gekennzeichnet,
daß das freie Ende des Hebels, welches auf jede
Nockenscheibe einwirkt, durch eine Rolle (17)
gebildet ist.

6. Vorrichtung nach einem der vorhergehenden Ansprüche, dadurch gekennzeichnet,
daß jede Nockenscheibe selbst durch zwei
Rollen (18) mit vertikalen Achsen gebildet ist.

7. Vorrichtung nach Anspruch 6, dadurch gekennzeichnet, daß die Nockenscheibe beiderseits
der besagten Gipfel (14a) in der Bewegungsbahn,
in der sich ein Teil des schwenkbaren Hebels
befindet, Vorsprünge (32) aufweist, welche verhindern, daß die Rolle des Hebels mit einer der
Rollen der Nockenscheibe in Kontakt kommt.

8. Vorrichtung nach einem der vorhergehenden Ansprüche, dadurch gekennzeichnet,
daß das durch die Nockenscheibe gebildete Element der Vorrichtung mit einer Klammer (15)
einstückig ausgebildet ist, die an der drehbaren
Grundplatte eines Bügels anbringbar ist, und daß
die horizontale Achse (9), an welcher der
schwenkbare Hebel (8) angelenkt ist, durch eine
Platte (10) getragen ist, in welcher Bohrungen
vorgesehen sind, die mit jenen korrespondieren,
die zur Fixierung der Grundplatten der Bügel des
Trolleybusses vorgesehen sind.

0 015 854

FIG.1

FIG.2

FIG.3

FIG.4

**0 015 854**

FIG.5

FIG.6

2

# FIG.7